# EUROPÄISCHE PATENTANMELDUNG

(11) **EP 2 444 773 A1**
(43) Veröffentlichungstag der Anmeldung: **25.04.2012**
(21) Anmeldenummer: 11185785.0
(22) Anmeldetag: 19.10.2011
(51) Int. Cl.: G01B 11/16, G01B 11/25, G01M 5/00

(54) **Verfahren und Vorrichtung zur Tragfähigkeitsmessung von Untergründen**

(30) Priorität: 19.10.2010 DE 102010042635
(71) Anmelder: Technische Universität Dresden, 01069 Dresden (DE)
(72) Erfinder: Steffen, Scheller, 01309 Dresden (DE); Ebersbach, Dirk, 01159 Dresden (DE)
(74) Vertreter: Lippert, Stachow & Partner

(57) **Zusammenfassung**

Die Erfindung betrifft ein Verfahren zur Tragfähigkeitsmessung von Untergründen, umfassend die Schritte Überfahren eines Abschnitts des zu vermessenden Untergrunds mit einer fahrbaren, massebehafteten Messvorrichtung, berührungsloses Abtasten des Untergrundes während des Überfahrens durch mindestens ein von der Messvorrichtung auf den Untergrund projiziertes, gerichtetes Messsignal und Erfassung des vom Untergrund reflektierten Messsignals in der Messvorrichtung, Ermittlung einer Verformung des Untergrunds durch Auswertung des erfassten Messsignals, sowie eine Vorrichtung zur Tragfähigkeitsmessung von Untergründen, umfassend ein fahrbares Grundgestell mit mindestens einem Rad, mindestens einen am Grundgestell angeordneten Messsignalsender zur Projektion eines gerichteten Messsignals auf den Untergrund sowie mindestens einen am Grundgestell angeordneten Messsignalempfänger zur Erfassung des vom Untergrund reflektierten Messsignals.

## Beschreibung

Die Erfindung betrifft ein Verfahren zur Tragfähigkeitsmessung von Untergründen mit den Merkmalen des Anspruchs 1 sowie eine Vorrichtung zur Durchführung des Verfahrens mit den Merkmalen des Anspruchs 12. Ausgestaltungen und Weiterbildungen sind in den abhängigen Ansprüchen beschrieben.

Die Wertermittlung der Verkehrsinfrastruktur ist ein wesentlicher Bestandteil bei der Bewertung des Infrastrukturvermögens. Infrastrukturanlagen sind innerhalb ihrer Nutzungszeit der Alterung und dem Verschleiß ausgesetzt. Das bedeutet, eine Straße kann nur über eine bestimmte Zeitdauer uneingeschränkt genutzt werden. Die Bewertung des Straßenzustandes und daraus abgeleitet die Ermittlung des Substanzwertes stellen somit wesentliche Schritte im Management der Straßenerhaltung dar. Eine wesentliche Zustandsgröße dabei ist die Tragfähigkeit einer Straßenbefestigung, die als elastische Verformung unter einer Lasteinwirkung charakterisiert ist. Einflussfaktoren sind dabei die Art, die Dicke und der Zustand der einzelnen Schichten der Straßenbefestigung sowie der Schichtenverbund zwischen diesen Schichten. Daraus kann abgeleitet werden, dass der Betrag der elastischen Einsenkung und die Form der Einsenkungsmulde als Indikator für den Befestigungszustand geeignet sind. Die "elastische Verformung" ist definiert als kurzzeitige, nach Entlastung in die ursprüngliche Lage zurückgehende Formänderung der Straßenbefestigung. Als "Einsenkung" wird eine unter bestimmten Randbedingungen auf der Schichtoberfläche gemessene Höhenänderung eines Punktes zwischen zwei Belastungszuständen definiert. Die zum Zeitpunkt der Messung vorhandene Tragfähigkeit kann mit diesen Merkmalen abgeleitet werden, auf deren Basis eine Auswahl eventuell zu ergreifender Maßnahmen getroffen werden kann [SCHMUCK].

Die Tragfähigkeit stellt somit eine wesentliche Größe bei der Bewertung von Straßenbefestigungen dar und ist nach Möglichkeit flächendeckend zu erfassen.

Die heute vorhandenen Standardmessverfahren (Benkelman Balken, Falling Weight Deflectometer FWD) erlauben eine solche lückenlose Erfassung der Tragfähigkeit nicht, da sie nur punktuell Messwerte liefern (statische Verfahren). Eine netzweite Erfassung von Tragfähigkeitsmesswerten und eine Verwendung dieser Werte in Straßenmanagementsystemen sind somit nicht möglich.

Es besteht daher ein Bedürfnis nach Verfahren und Vorrichtungen zur kontinuierlichen, dynamischen Tragfähigkeitsmessung von Untergründen. Hierzu werden nachfolgend Verfahren und Vorrichtungen vorgeschlagen, mit denen derartige Tragfähigkeitsmessungen von Untergründen ermöglicht werden.

Das vorgeschlagene Verfahren zur Tragfähigkeitsmessung von Untergründen umfasst grundsätzlich die Schritte
- Überfahren eines Abschnitts des zu vermessenden Untergrunds mit einer fahrbaren, massebehafteten Messvorrichtung,
- berührungsloses Abtasten des Untergrundes während des Überfahrens durch mindestens ein von der Messvorrichtung auf den Untergrund projiziertes, gerichtetes Messsignal und Erfassung des vom Untergrund reflektierten Messsignals in der Messvorrichtung,
- Ermittlung einer Verformung des Untergrunds durch Auswertung des erfassten Messsignals.

Das der Erfindung zugrundeliegende Grundprinzip besteht in der berührungslosen Abtastung des Untergrunds, wobei die Messvorrichtung selbst das Gewicht darstellt, unter dessen Last die Verformung des Untergrunds eintritt, die ermittelt werden soll. Das Verfahren ermöglicht dynamische Tragfähigkeitsmessungen, die auch im laufenden Verkehr durchgeführt werden können, d.h. zu vermessende Straßen müssen dank des neuen Verfahrens nicht mehr für den öffentlichen Verkehr gesperrt werden. Darüber hinaus ermöglicht das Verfahren kontinuierliche Tragfähigkeitsmessungen, d.h. es kann ein Tragfähigkeitsverlauf über lange Strecken ermittelt werden, sodass auf einfache, zeit- und kostensparende Weise ein umfassendes Bild über die Tragfähigkeit eines zu vermessenden Untergrunds gewonnen werden kann. Das Verfahren ist auch schnell und kostengünstig wiederholbar, um die Messung statistisch abzusichern oder/und um Variationen der Tragfähigkeit zu erfassen, die sich aus Abweichungen der konkret befahrenen Spur ergeben können.

Als Messsignal kann beispielsweise ein in der Vorrichtung erzeugter sichtbarer Lichtstrahl, beispielsweise ein Laserstrahl, oder ein Lichtstrahl im nicht sichtbaren Frequenzspektrum, beispielsweise ein Infrarotstrahl, verwendet werden.

Dabei kann vorgesehen sein, dass mindestens zwei identifizierbar unterschiedliche Messsignale punktuell auf unterschiedliche Bereiche des Untergrunds projiziert werden. Die identifizierbare Unterscheidbarkeit ist notwendig, um jedes reflektierte Messsignal eindeutig dem reflektierenden Messpunkt zuordnen zu können. Diese Unterscheidbarkeit kann beispielsweise durch unterschiedliche Frequenzen der ausgesendeten Messsignale erreicht werden.

Die unterschiedlichen Bereiche können dabei in der Fahrtrichtung der Messvorrichtung hintereinander gewählt werden, um ein diskretes, oder durch Interpolation ein kontinuierliches Verformungsprofil in der Fahrtrichtung zu ermitteln, oder quer zur Fahrtrichtung der Messvorrichtung nebeneinander gewählt werden, um ein diskretes, oder durch Interpolation ein kontinuierliches Verformungsprofil quer zur Fahrtrichtung zu ermitteln. Im letzteren Fall wird durch die Bewegung der Messvorrichtung ein Verformungsprofil quer zur Fahrtrichtung fortlaufend ermittelt, sodass ein diskretes oder kontinuierliches dreidimensionales Verformungsprofil eines Untergrundstreifens gewonnen werden kann.

Die punktuelle Projektion eines oder mehrerer Messsignale auf den Untergrund erweist sich besonders bei der Betrachtung einzelner Messpunkte als vorteilhaft. Zur Messung eines Verformungsbildes entlang einer Linie kann es hingegen besonders vorteilhaft sein, mindestens ein Messsignal vor dem Aussenden in der Fahrtrichtung der Messvorrichtung oder quer zur Fahrtrichtung der Messvorrichtung linear aufzuweiten. Im ersten Fall kann ein kontinuierliches Verformungsprofil in der Fahrtrichtung ermittelt werden, während im letzteren Fall ein kontinuierliches Verformungsprofil quer zur Fahrtrichtung ermittelt werden kann. Dabei wird analog zur oben beschriebenen Ausgestaltung nebeneinander angeordneter Projektionspunkte durch die Bewegung der Messvorrichtung ein Verformungsprofil quer zur Fahrtrichtung fortlaufend ermittelt, sodass ein kontinuierliches dreidimensionales Verformungsprofil eines Untergrundstreifens gewonnen werden kann.

Weiter kann vorgesehen sein, dass das Messsignal unter verschiedenen Winkeln bezüglich des Untergrunds ausgesendet und empfangen wird. Hierdurch wird die die Ermittlung der Verformung durch Auswertung der Form mindestens eines reflektierten Messsignals, die in einer weiteren Ausgestaltung des Verfahrens vorgesehen sein kann, erleichtert. Wird beispielsweise ein Laserstrahl linear aufgeweitet und unter einem von 90° verschiedenen Winkel auf den Untergrund gerichtet, so kann die Projektion dieses Lichts auf den Untergrund mit einer Kamera erfasst werden. Ist der Untergrund eben, so bildet sich darauf eine Gerade aus reflektiertem Licht ab. Bei Einwirkung einer Last hingegen verformt sich der Untergrund und das von der Kamera erfasste reflektierte Licht stellt eine gekrümmte Linie dar. Aus der konkreten Form der Linie lässt sich die Verformung des Untergrunds ermitteln.

Alternativ kann die Ermittlung der Verformung durch Auswertung der Laufzeit mindestens eines Messsignals erfolgen. Bei ebenem Untergrund haben der Messsignalsender und der Messsignalempfänger jeweils einen bekannten Abstand zum Untergrund. Wird der Untergrund verformt, so verändern sich diese Abstände, woraus eine veränderte Signallaufzeit vom Messsignalsender zum Messsignalempfänger resultiert. Aus der Messung der Laufzeit und dem Vergleich mit dem Ausgangswert bei unverformtem Untergrund lässt sich die Verformung des Untergrunds zum Messzeitpunkt ermitteln.

In einer weiteren Ausgestaltung des Verfahrens ist vorgesehen, dass das Messsignal neben dem Aufstandpunkt eines Rades oder vor oder hinter einem Rad der Messvorrichtung auf den Untergrund projiziert wird. Im ersten Fall kann die Verformung am Radaufstandspunkt, jedoch mit leichtem seitlichem Versatz ermittelt werden. Die sich daraus ergebende Abweichung von der tatsächlichen Verformungsamplitude kann durch Kalibrierung kompensiert werden. In den beiden anderen Fällen kann die Verformung am Radaufstandspunkt, jedoch mit leichtem Versatz in der Längsrichtung ermittelt werden. Die sich daraus ergebende Abweichung von der tatsächlichen Verformungsamplitude kann ebenfalls durch Kalibrierung kompensiert werden. Zur Kalibrierung jeder Variante kann die jeweils andere Variante herangezogen werden. Weist die Messvorrichtung Zwillingsreifen auf, so kann die Messung auch zwischen den beiden Reifen erfolgen, sodass die Verformung des Untergrunds in diesem Bereich ermittelt werden kann.

Die Null-Lage eines beliebigen Punktes des Untergrundes kann beispielsweise dadurch ermittelt werden, dass eine erste punktuelle Messung der Verformung dieses Punktes in unmittelbarer Nähe des Radaufstandspunktes und eine weitere punktuelle Messung der Verformung desselben Punktes des Untergrundes mit ausreichendem Abstand zum Radaufstandspunkt vorgenommen wird, wobei die erneute Identifizierung dieses Punktes des Untergrundes anhand des Abstandes der beiden verwendeten Messeinrichtungen (Messsignalsender und Messsignalempfänger) an der Messvorrichtung und der Geschwindigkeit der Messvorrichtung erfolgen kann. Alternativ kann die Null-Lage eines beliebigen Punktes des Untergrundes dadurch ermittelt werden, dass ein Messsignal in der Fahrtrichtung aufgeweitet wird und die maximale Verformung dieses Punktes des Untergrundes mit der minimalen Verformung dieses Punktes aus einer früher oder später aufgenommenen Verformungslinie miteinander verglichen werden, wobei die Identifizierung desselben Punktes in unterschiedlichen Messungen ebenfalls nach dem oben beschriebenen Prinzip erfolgen kann.

Zur Durchführung des Verfahrens wird eine Vorrichtung zur Tragfähigkeitsmessung von Untergründen, die ein fahrbares Grundgestell mit mindestens einem Rad, mindestens einen am Grundgestell angeordneten Messsignalsender zur Projektion eines gerichteten Messsignals auf den Untergrund sowie mindestens einen am Grundgestell angeordneten Messsignalempfänger zur Erfassung des vom Untergrund reflektierten Messsignals umfasst.

Die Ansteuerung der messtechnischen Komponenten kann durch eine externe Einrichtung erfolgen. Dabei können Einrichtungen zur drahtlosen Signalübertragung verwendet werden. Die Vorrichtung kann selbstfahrend sein oder so ausgebildet sein, dass sie von einem Fahrzeug gezogen werden kann.

Die Masse der Vorrichtung kann zur Simulation verschiedener Lastzustände auf einfache Weise verändert werden, beispielsweise indem am Grundgestell eine Lastaufnahme zur Anbringung eines variablen Gewichts angeordnet ist. Bei einer auf einem Lastkraftwagen basierenden Messvorrichtung kann dies beispielsweise die Ladefläche sein, die mit unterschiedlichen Mengen eines Ballasts, beispielsweise Kies, beladen wird. In gleicher Weise ist ein Tank verwendbar, der mit flüssigem Ballast, beispielsweise Wasser beladen wird.

An der Vorrichtung können weiterhin eine Kraftmesseinrichtung zur Ermittlung einer Radaufstandskraft oder/und eine Wegmesseinrichtung zur Ermittlung des gefahrenen Wegs oder/und eine Zeitmesseinrichtung zur Ermittlung einer Messzeit vorgesehen sein, die ebenfalls am Grundgestell angeordnet sein können. Insbesondere die Kraftmesseinrichtung zur Ermittlung einer Radaufstandskraft und die Wegmesseinrichtung zur Ermittlung des gefahrenen Wegs können am Rad oder an Achsführungsteilen des Rades angeordnet sein.

In einer Ausgestaltung der Vorrichtung ist weiterhin eine Auswerteeinrichtung vorgesehen, die mit dem oder den Messsignalsendern oder/und dem oder den Messsignalempfängern in einer Signalübertragungsverbindung steht. Sofern vorhanden, kann die Auswerteeinrichtung auch mit der Kraftmesseinrichtung oder/und der Wegmesseinrichtung oder/und der Zeitmesseinrichtung in einer Signalübertragungsverbindung stehen. Die Zeitmesseinrichtung kann dabei integraler Bestandteil der Auswerteeinrichtung sein, beispielsweise wenn diese als Computer ausgebildet ist. Die Signalübertragungsverbindung kann drahtgebunden oder drahtlos, beispielsweise unter Verwendung von Einrichtungen zur drahtlosen Signalübertragung erfolgen.

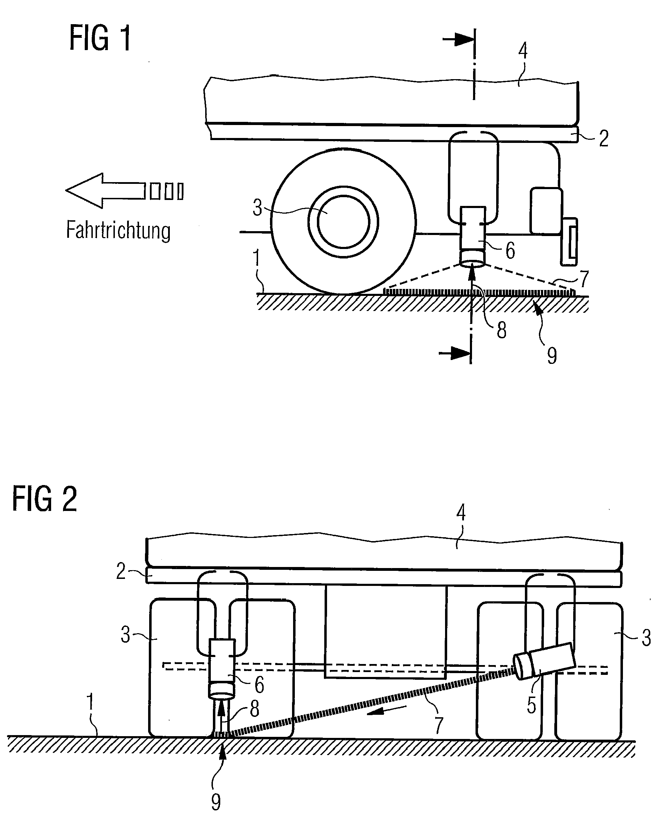

Nachfolgend wird die Erfindung anhand eines Ausführungsbeispiels und zugehöriger Zeichnungen näher erläutert. Dabei zeigen
Fig. 1 eine Teilansicht einer erfindungsgemäßen Vorrichtung von der Seite, und
Fig. 2 eine Teilansicht einer erfindungsgemäßen Vorrichtung von hinten.

Bei der Vorrichtung gemäß Ausführungsbeispiel handelt es sich um eine schnellfahrende Tragfähigkeitsmessvorrichtung auf der Basis eines Lastkraftwagens mit Rädern 3 und einer Ladefläche 4 zur Aufnahme von Stück- oder Schüttgut, bei der der Fahrzeugrahmen das Grundgestell 2 darstellt.

Der Untergrund 1 ist die Straße, auf der die Vorrichtung fährt.

Als Messprinzip soll ein Laser-Lichtschnittverfahren angewendet werden. Dazu wird in einem Messsignalsender 5 durch eine Laserquelle ein Lichtstrahl erzeugt, durch ein Prisma zu einer Lichtebene 7 aufgeweitet und unter einem bestimmten Winkel auf die Straßenoberfläche 1 projiziert. Bei einer ebenen Straßenoberfläche 1 wird die somit aufgespannte Lichtebene 7 als exakte Gerade abgebildet. Jede Unebenheit (d.h. jeder Höhenunterschied) auf der Straßenoberfläche 1 stellt sich aus der Sicht einer Kamera, die als Messsignalempfänger 6 dient und die unter einem anderen Winkel als der Messsignalsender 5 auf die Straßenoberfläche 1 gerichtet ist, als eine Abweichung von der Geraden dar. Die auf der Straßenoberfläche 1 und, nach Reflexion durch die Straßenoberfläche 1, in der Kamera 6 abgebildete Lichtlinie 8 ist aufgrund der durch die Radaufstandskraft verformten Straßenoberfläche 1 gekrümmt. Sie stellt die Schnittlinie der Lichtebene 7 mit der unebenen Straßenoberfläche 1 dar.

Die Weiterbewegung des Fahrzeuges ermöglicht eine Mehrfachvermessung von identischen Positionen entlang der projizierten Laserebene. Durch eine sehr hochfrequente bildbasierte Wiederholungsmessung wird ein und derselbe Ort {Position auf der Straße) mehrmals aufgenommen. Somit erfolgt am selben Ort mehrmals die gleiche Auswertung. Durch die Weiterbewegung des Fahrzeuges erfährt jede mehrfach erfasste Position verschiedene Lastzustände. Die Höhendifferenzen zwischen den einzelnen Positionen zu unterschiedlichen Lastzuständen (Zeiten) ergibt damit die gesuchte Verformungsmulde.

Die Tragfähigkeit kann mithilfe dieses Verfahrens schnellfahrend gemessen werden. Damit steht sie als wesentliche Eingangsgröße für die Bewertung zur Verfügung. Eine netzweite Erfassung der Tragfähigkeit von Straßen und anderen Untergründen ist somit möglich.

Die Vorrichtung gemäß Ausführungsbeispiel umfasst ein Fahrzeug (bewegliche Plattform > 60 km/h), ein photogrammetrisch kalibriertes Kamerasystem, eine Laserquelle mit Aufweitung des Laserstrahls zur Laserebene, eine Zeit-Weg Synchronisation zwischen Fahrzeug und Kamerasystem sowie eine Kraftmessdose.

Das aus Laserquelle und Kamera bestehende Laserlichtschnittsystem arbeitet mit Submillimeter-Genauigkeit. Das gesamte Messsystem ist auf einer beweglichen Plattform integriert.

Die Kraftmesseinrichtung ist so angebracht, dass die Radaufstandskraft ermittelbar ist. Das Messsystem zur Verformungsmessung ist hinter einem belasteten Rad in der Spur dieses Rades angebracht, d.h. die Lichtebene wird hinter dem Rad auf die Straßenoberfläche projiziert.

Die Vorrichtung ermöglicht die dynamische Messung der Einsenkmulde durch Mehrfachmessung gleicher Positionen zu unterschiedlichen Zeitpunkten.

Durch Bewegung des Fahrzeuges ergeben sich für jeden mehrfach gemessenen Punkt entlang der Laserebene verschiedene Belastungszustände, aus denen die Einsenkmulde berechnet wird.

### Bezugszeichenliste

- 1: Untergrund
- 2: Grundgestell
- 3: Rad
- 4: Ladefläche
- 5: Messsignalsender
- 6: Messsignalempfänger
- 7: ausgesendetes Messsignal
- 8: reflektiertes Messsignal
- 9: auftreffendes Messsignal (aufgeweitete Lichtlinie)

## Patentansprüche

1. Verfahren zur Tragfähigkeitsmessung von Untergründen (1), umfassend die Schritte
• Überfahren eines Abschnitts des zu vermessenden Untergrunds (1) mit einer fahrbaren, massebehafteten Messvorrichtung,
• berührungsloses Abtasten des Untergrundes (1) während des Überfahrens durch mindestens ein von der Messvorrichtung auf den Untergrund (1) projiziertes, gerichtetes Messsignal (7) und Erfassung des vom Untergrund (1) reflektierten Messsignals (8) in der Messvorrichtung,
• Ermittlung einer Verformung des Untergrunds (1) durch Auswertung des erfassten Messsignals (8).

2. Verfahren nach Anspruch 1, **dadurch gekennzeichnet, dass** als Messsignal (7) ein in der Vorrichtung erzeugter Lichtstrahl verwendet wird.

3. Verfahren nach Anspruch 1 oder 2, **dadurch gekennzeichnet, dass** mindestens zwei identifizierbar unterschiedliche Messsignale (7) punktuell auf unterschiedliche Bereiche des Untergrunds (1) projiziert werden.

4. Verfahren nach Anspruch 3, **dadurch gekennzeichnet, dass** die unterschiedlichen Bereiche in der Fahrtrichtung der Messvorrichtung hintereinander gewählt werden.

5. Verfahren nach Anspruch 3 oder 4, **dadurch gekennzeichnet, dass** die unterschiedlichen Bereiche quer zur Fahrtrichtung der Messvorrichtung nebeneinander gewählt werden.

6. Verfahren nach einem der Ansprüche 1 bis 5, **dadurch gekennzeichnet, dass** mindestens ein Messsignal (7) vor dem Aussenden in der Fahrtrichtung der Messvorrichtung linear aufgeweitet wird.

7. Verfahren nach einem der Ansprüche 1 bis 6, **dadurch gekennzeichnet, dass** mindestens ein Messsignal (7) vor dem Aussenden quer zur Fahrtrichtung der Messvorrichtung linear aufgeweitet wird

8. Verfahren nach einem der Ansprüche 1 bis 7, **dadurch gekennzeichnet, dass** das Messsignal (7, 8) unter verschiedenen Winkeln bezüglich des Untergrunds ausgesendet und empfangen wird.

9. Verfahren nach einem der Ansprüche 1 bis 8, **dadurch gekennzeichnet, dass** das Messsignal (7) vor oder hinter einem Rad der Messvorrichtung auf den Untergrund projiziert wird.

10. Verfahren nach einem der Ansprüche 1 bis 9, **dadurch gekennzeichnet, dass** die Ermittlung der Verformung durch Auswertung der Form mindestens eines reflektierten Messsignals (8) erfolgt.

11. Verfahren nach einem der Ansprüche 1 bis 10, **dadurch gekennzeichnet, dass** die Ermittlung der Verformung durch Auswertung der Laufzeit mindestens eines reflektierten Messsignals (8) erfolgt.

12. Vorrichtung zur Tragfähigkeitsmessung von Untergründen (1), umfassend ein fahrbares Grundgestell (2) mit mindestens einem Rad (3), mindestens einen am Grundgestell (2) angeordneten Messsignalsender (5) zur Projektion eines gerichteten Messsignals (7) auf den Untergrund (1) sowie mindestens einen am Grundgestell (2) angeordneten Messsignalempfänger (6) zur Erfassung des vom Untergrund reflektierten Messsignals (8).

13. Vorrichtung nach Anspruch 12, **dadurch gekennzeichnet, dass** eine Kraftmesseinrichtung zur Ermittlung einer Radaufstandskraft vorgesehen ist.

14. Vorrichtung nach Anspruch 12 oder 13, **dadurch gekennzeichnet, dass** eine Wegmesseinrichtung zur Ermittlung des gefahrenen Wegs vorgesehen ist.

15. Vorrichtung nach einem der Ansprüche 12 bis 14, **dadurch gekennzeichnet, dass** eine Zeitmesseinrichtung zur Ermittlung einer Messzeit vorgesehen ist.

16. Vorrichtung nach einem der Ansprüche 12 bis 15, **dadurch gekennzeichnet, dass** eine Auswerteeinrichtung vorgesehen ist, die mit dem oder den Messsignalsendern (5) oder/und dem oder den Messsignalempfängern (6) oder/und, sofern vorhanden, der Kraftmesseinrichtung oder/und der Wegmesseinrichtung oder/und der Zeitmesseinrichtung in einer Signalübertragungsverbindung steht.
